# EUROPEAN PATENT APPLICATION

(11) **EP 3 637 827 A1**
(43) Date of publication of application: **15.04.2020**
(21) Application number: 18816660.7
(22) Date of filing: 25.05.2018
(51) Int. Cl.: H04W 24/00

(54) **DATA TRANSMISSION METHOD AND DEVICE**

(30) Priority: 14.06.2017 CN 201710446361
(71) Applicant: Huawei Technologies Co., Ltd., Longgang District Shenzhen, Guangdong 518129 (CN)
(72) Inventor: HOU, Yihe, Shenzhen Guangdong 518129 (CN); YU, Yijun, Shenzhen Guangdong 518129 (CN); CAO, Longyu, Shenzhen Guangdong 518129 (CN)
(74) Representative: Körber, Martin Hans
(86) International application number: PCT/CN2018/088329
(87) International publication number: WO 2018/228165

(57) **Abstract**

Embodiments of this application relate to a data transmission method and a device. The method includes: sending, by a second network element, control signaling to a first network element; and sending, by the second network element, a third message to a shared data layer, where the control signaling includes temporary data related to the control signaling, and the third message includes static data related to the control signaling. After receiving the third message, the shared data layer sends a first message to the first network element, where the first message includes the static data related to the control signaling. After receiving the control signaling from the second network element and receiving the first message from the shared data layer, the first network element executes the control signaling. In the embodiments of this application, the second network element sends the temporary data related to the control signaling to the first network element by using the control signaling, and sends the static data related to the control signaling to the first network element by using the shared data layer, to help reduce channel bandwidth resources that the control signaling needs to occupy.

## Description

This application claims priority to Chinese Patent Application No. 201710446361.2, filed with the China National Intellectual Property Administration on June 14, 2017 and entitled "DATA TRANSMISSION METHOD AND DEVICE", which is incorporated herein by reference in its entirety.

### TECHNICAL FIELD

This application relates to the field of communications technologies, and in particular, to a data transmission method and a device.

### BACKGROUND

In a 4th generation communications system (the 4th generation communication system, 4G), data is transmitted between control plane network elements by using control signaling. For example, in a cell handover procedure, when a source base station needs to send a handover request to a target base station, the source base station adds, to the handover request, data that needs to be sent to the target base station, and sends the handover request to the target base station. In the prior art, in a control signaling transmission method, a relatively large quantity of bandwidth resources need to be consumed.

### SUMMARY

Embodiments of the present invention provide a data transmission method and a device, to help reduce bandwidth resources that control signaling needs to occupy in a transmission process.

According to a first aspect, an embodiment of this application provides a data transmission method. The method includes:
receiving, by a first network element, control signaling from a second network element, and receiving a first message from a shared data layer, where the control signaling includes temporary data related to the control signaling, and the first message includes static data related to the control signaling; and then executing, by the first network element, the control signaling based on the temporary data related to the control signaling that is included in the control signaling and the static data related to the control signaling that is included in the first message.

In this embodiment of this application, the temporary data related to the control signaling is sent to the first network element by using the control signaling, and the static data related to the control signaling is sent to the first network element by using the shared data layer. Therefore, compared with the prior art in which both the temporary data related to the control signaling and the static data related to the control signaling are sent to the first network element by using the control signaling, this helps reduce channel bandwidth resources that the control signaling needs to occupy and that are between the first network element and the second network element.

Based on the first aspect, in a possible design, the temporary data includes data required by the first network element only in a process of executing the control signaling.

The data required by the first network element only in the process of executing the control signaling does not need to be stored at the shared data layer, and therefore, the data is sent to the second network element by using the control signaling, to help improve utilization of the shared data layer.

Based on the first aspect, in a possible design, the static data includes user context information.

The user context information not only needs to be sent to the first network element for executing the control signaling, but also needs to be stored at the shared data layer. Therefore, the user context information is sent to the first network element by using the shared data layer, to help reduce channel bandwidth resources that are occupied by the control signaling and that are between the first network element and the second network element. Compared with sending all data to the first network element by using the shared data layer, sending the temporary data to the first network element by using the control signaling helps reduce channel bandwidth resources that are occupied by the first message and that are between the first network element and the shared data layer, thereby increasing a data transmission rate, and further improving performance of executing the control signaling by the first network element. In addition, the foregoing technical solution further helps another network element obtain the user context information.

Based on the first aspect, in a possible design, the first network element sends a second message to the shared data layer, where the second message is used to request the shared data layer to send the first message to the first network element, and then the first network element receives the first message from the shared data layer.

The foregoing technical solution provides another possible manner in which the shared data layer sends the first message to the first network element.

Based on the first aspect, in a possible design, the second message includes at least one of identification information of a service procedure corresponding to the control signaling, identification information of a terminal in the service procedure, and synchronization identification information.

According to a second aspect, an embodiment of this application provides a data transmission method. The method includes:
receiving, by a shared data layer, a third message from a second network element, and sending a first message to a first network element, so that the first network element is configured to execute control signaling sent by the second network element based on static data, where the third message includes the static data related to the control signaling, and the first message includes the static data related to the control signaling.

The static data related to the control signaling is sent to the first network element by using the shared data layer. Therefore, compared with the prior art in which the static data related to the control signaling is sent to the first network element by using the control signaling, the method, on one hand, helps the shared data layer store the static data related to the control signaling, and on the other hand, helps reduce channel bandwidth resources that are occupied by the control signaling and that are between the first network element and the second network element.

It should be noted that the first message in this embodiment of this application may further include other static data that is required for executing the control signaling and that is stored at the shared data layer than the static data related to the control signaling.

Based on the second aspect, in a possible design, the static data includes user context information.

The user context information not only needs to be stored at the shared data layer, but also needs to be sent to the first network element. Therefore, the user context information is sent to the first network element by using the shared data layer, to help reduce channel bandwidth resources occupied by the control signaling. In addition, the foregoing technical solution helps another network element obtain the user context information.

Data required by the first network element only in a process of executing the control signaling does not need to be stored at the shared data layer, and therefore, the data is sent to the second network element by using the control signaling, to help improve utilization of the shared data layer.

Based on the second aspect, in a possible design, the third message further includes identification information of a service procedure corresponding to the control signaling. The shared data layer determines the static data related to the control signaling based on the identification information of the service procedure, and then sends the first message to the first network element.

Based on the second aspect, in a possible design, the third message further includes device identification information of a terminal device in the service procedure corresponding to the control signaling, and the shared data layer writes the static data included in the third message into storage space corresponding to the identification information of the terminal.

Based on the second aspect, in a possible design, the shared data layer receives a second message from the first network element, and then sends the first message to the first network element, where the second message includes at least one of the identification information of the service procedure corresponding to the control signaling, the identification information of the terminal in the service procedure, and synchronization identification information, and the second message is used to request the shared data layer to send the first message to the first network element.

Based on the second aspect, in a possible design, the third message further includes synchronization identification information; and
after determining that the synchronization identification information included in the second message is consistent with the synchronization identification information included in the third message, the shared data layer sends the first message to the first network element.

Temporary data and the static data that are required by the first network element to execute the control signaling are respectively from the second network element and the shared data layer. Therefore, the synchronization identification information is introduced, to help correctly execute the control signaling.

It should be noted that the synchronization identification information may be time information of sending the control signaling by the second network element to the first network element, or time information of sending the static data related to the control signaling by the second network element to the shared data layer. Alternatively, the synchronization identification information may be a random identifier, such as a bit value or a sequence. This is not limited in this embodiment of this application.

In addition, the synchronization identification information included in the second message is obtained from the control signaling sent by the second network element to the first network element, and in a same service procedure phase, synchronization identification information included in the control signaling is the same as the synchronization identification information included in the third message. Therefore, the shared data layer can send the first message to the first network element by using the synchronization identification information, to help the first network element correctly execute the control signaling based on the static data related to the control signaling that is included in the first message and the temporary data related to the control signaling.

According to a third aspect, an embodiment of this application provides a data transmission method. The method includes:
sending, by a second network element, control signaling to a first network element, and sending a third message to a shared data layer, where the control signaling includes temporary data related to the control signaling, and the third message includes static data related to the control signaling.

The control signaling includes the temporary data related to the control signaling, and the third message includes the static data related to the control signaling. Therefore, compared with the prior art in which the control signaling includes the temporary data related to the control signaling and the static data related to the control signaling, the method helps reduce channel bandwidth resources occupied by the control signaling and increase a transmission rate of the control signaling.

Based on the third aspect, in a possible design, the temporary data includes data required by the first network element only in a process of executing the control signaling.

The data required by the first network element only in the process of executing the control signaling does not need to be stored at the shared data layer. Therefore, the static data related to the control signaling is sent to the shared data layer by using the first message, to help improve utilization of the shared data layer.

Based on the third aspect, in a possible design, the static data includes user context information.

The foregoing technical solution helps another network element obtain the user context information.

Based on the third aspect, in a possible design, the third message further includes at least one of identification information of a service procedure corresponding to the control signaling, identification information of a terminal in the service procedure, and synchronization identification information.

Based on the third aspect, in a possible design, the second network element determines the temporary data related to the control signaling and the static data related to the control signaling.

It should be noted that in this embodiment of this application, a possible implementation in which the second network element determines the temporary data related to the control signaling and the static data related to the control signaling is: A correspondence of a data type is preconfigured in the second network element. For example, if data is a security context, a data type of the data is static data.

Based on the third aspect, in a possible design, the control signaling further includes at least one of the identification information of the terminal in the service procedure corresponding to the control signaling and the synchronization identification information.

Based on the third aspect, in a possible design, the third message further includes transparently transmitted data that needs to be sent to a third network element.

Compared with the prior art in which the transparently transmitted data that needs to be sent to the third network element is sent to the second network element by using the control signaling, and then the transparently transmitted data is sent to the third network element by using the second network element, the foregoing technical solution further helps reduce the channel bandwidth resources occupied by the control signaling.

According to a fourth aspect, a first network element in an embodiment of this application includes a transceiver and a processor. The transceiver is configured to receive control signaling from a second network element and receive a first message from a shared data layer, where the control signaling includes temporary data related to the control signaling, and the first message includes static data related to the control signaling. The processor is configured to execute the control signaling based on the temporary data and the static data.

Based on the fourth aspect, in a possible design, the temporary data includes data required by the processor only in a process of executing the control signaling.

Based on the fourth aspect, in a possible design, the static data includes user context information.

Based on the fourth aspect, in a possible design, the transceiver is further configured to send a second message to the shared data layer before receiving the first message from the shared data layer, where the second message is used to request the shared data layer to send the first message to the first network element.

Based on the fourth aspect, in a possible design, the second message includes at least one of identification information of a service procedure corresponding to the control signaling, identification information of a terminal in the service procedure, and synchronization identification information.

According to another aspect of this application, a first network element is further provided. The first network element includes a processing module and a transceiver module, which are configured to perform corresponding functions in the foregoing method examples. For details, refer to detailed descriptions in the method examples. Details are not described herein again.

According to still another aspect of this application, a computer-readable storage medium is provided. The computer-readable storage medium stores an instruction, and when the instruction is run on a computer, the computer is enabled to perform the methods according to the foregoing aspects.

According to still another aspect of this application, a computer program product including an instruction is provided. When the computer program product is run on a computer, the computer is enabled to perform the methods according to the foregoing aspects.

According to a fifth aspect, a shared data layer in an embodiment of this application includes a transceiver and a processor. The transceiver is configured to receive a third message from a second network element and send a first message to a first network element, where the third message includes static data related to control signaling. The processor is configured to generate the first message sent to the first network element, where the first message includes the static data related to the control signaling, so that the first network element is configured to execute, based on the static data, the control signaling sent by the second network element.

Based on the fifth aspect, in a possible design, the static data includes user context information.

Based on the fifth aspect, in a possible design, the third message further includes identification information of a service procedure corresponding to the control signaling, and the processor is further configured to: before the transceiver sends the first message to the first network element, determine the static data related to the control signaling based on the identification information of the service procedure.

Based on the fifth aspect, in a possible design, the third message further includes device identification information of a terminal device in the service procedure corresponding to the control signaling, and the processor is further configured to write the static data included in the third message into storage space corresponding to the identification information of the terminal.

Based on the fifth aspect, in a possible design, the transceiver is further configured to receive a second message from the first network element before sending the first message to the first network element, where the second message includes at least one of the identification information of the service procedure corresponding to the control signaling, the identification information of the terminal in the service procedure, and synchronization identification information, and the second message is used to request the shared data layer to send the first message to the first network element.

Based on the fifth aspect, in a possible design, the third message further includes synchronization identification information, and the processor is further configured to: before the transceiver sends the first message to the first network element, determine that the synchronization identification information included in the second message is consistent with the synchronization identification information included in the third message.

According to another aspect of this application, a first network element is further provided. The first network element includes a processing module and a transceiver module, which are configured to perform corresponding functions in the foregoing method examples. For details, refer to detailed descriptions in the method examples. Details are not described herein again.

According to still another aspect of this application, a computer-readable storage medium is provided. The computer-readable storage medium stores an instruction, and when the instruction is run on a computer, the computer is enabled to perform the methods according to the foregoing aspects.

According to still another aspect of this application, a computer program product including an instruction is provided. When the computer program product is run on a computer, the computer is enabled to perform the methods according to the foregoing aspects.

According to a sixth aspect, a second network element in an embodiment of this application includes a transceiver and a processor. The transceiver is configured to send control signaling and a third message to a first network element, where the control signaling includes temporary data related to the control signaling, the third message includes static data related to the control signaling, and the third message is generated by the processor.

Based on the sixth aspect, in a possible design, the temporary data includes data required by the first network element only in a process of executing the control signaling.

Based on the sixth aspect, in a possible design, the static data includes user context information.

Based on the sixth aspect, in a possible design, the third message further includes at least one of identification information of a service procedure corresponding to the control signaling, identification information of a terminal in the service procedure, and synchronization identification information.

Based on the sixth aspect, in a possible design, the processor is further configured to determine the temporary data related to the control signaling and the static data related to the control signaling.

Based on the sixth aspect, in a possible design, the control signaling further includes at least one of the identification information of the terminal in the service procedure corresponding to the control signaling and the synchronization identification information.

Based on the sixth aspect, in a possible design, the third message further includes transparently transmitted data that needs to be sent to a third network element.

According to another aspect of this application, a first network element is further provided. The first network element includes a processing module and a transceiver module, which are configured to perform corresponding functions in the foregoing method examples. For details, refer to detailed descriptions in the method examples. Details are not described herein again.

According to still another aspect of this application, a computer-readable storage medium is provided. The computer-readable storage medium stores an instruction, and when the instruction is run on a computer, the computer is enabled to perform the methods according to the foregoing aspects.

According to still another aspect of this application, a computer program product including an instruction is provided. When the computer program product is run on a computer, the computer is enabled to perform the methods according to the foregoing aspects.

An embodiment of this application further provides a communications system, including the first network element according to any one of the fourth aspect and the designs of the fourth aspect, the shared data layer according to any one of the fifth aspect and the designs of the fifth aspect, and the second network element according to any one of the sixth aspect and the designs of the sixth aspect.

### BRIEF DESCRIPTION OF DRAWINGS

FIG. 1 is a schematic diagram of a system architecture to which a data transmission method is applied according to an embodiment of this application;
FIG. 2 is a schematic flowchart of a data transmission method according to an embodiment of this application;
FIG. 3 is a schematic flowchart of a data transmission method according to an embodiment of this application;
FIG. 4a is a schematic flowchart of data update according to an embodiment of this application;
FIG. 4b is a schematic flowchart of data read according to an embodiment of this application;
FIG. 4c is a schematic flowchart of data read according to an embodiment of this application;
FIG. 5a and FIG. 5b each are a schematic structural diagram of a first network element according to an embodiment of this application;
FIG. 6a and FIG. 6b each are a schematic structural diagram of a shared data layer according to an embodiment of this application;
FIG. 7a and FIG. 7b each are a schematic structural diagram of a second network element according to an embodiment of this application; and
FIG. 8 is a schematic structural diagram of a communications system according to an embodiment of this application.

### DESCRIPTION OF EMBODIMENTS

Embodiments of this application are described in detail below with reference to accompanying drawings of the specification.

It should be understood that in the embodiments of this application, a first network element and a second network element may be physical network element devices, or may be network functions (network function, NF). For example, the NF may be a virtual network function (virtual network function, VNF). This is not limited in the embodiments of this application. For example, network elements in the embodiments of this application may be a control plane network element in a 4th generation mobile communications (the 4th generation mobile communication, 4G) network, such as an evolved NodeB (evolved node B, eNB), a mobility management entity (mobility management entity, MME), a serving gateway (severing gate way, SGW), a PDN gateway (PDN gate way, PGW), and a policy and charging rules function (policy and charging rules function, PCRF) unit, a control plane network element in a control and forwarding separated architecture in 4G, such as an eNB, an MME, a gateway control plane function (gateway control, GW-C), and a PCRF, and a control plane network element in 5th generation mobile communications (the 5th Generation mobile communication, 5G), such as a radio access network control plane function (radio access network control, RAN-C), a core network access and mobility management function (core access and mobility management function, AMF), a session management function (Session Management Function, SMF), a policy control function (policy control function, PCF), and an authentication server function (authentication server function, AUSF).

It should be understood that a shared data layer provides a data management function and a shared service function for the network element. The shared data layer may be a device or a virtualized network function that exists independent of the network element. This is not limited in the embodiments of this application.

It should be understood that static data related to control signaling includes user context information, for example, a mobility management (mobility management, MM) context, a session management (session management, SM) context, and a security context. In a conventional network, after a service procedure ends, this type of data is stored in various network elements as static data, and identifies current states of a user in different aspects such as mobility management, session management, and security. The user context information needs to be shared between a plurality of network elements. Therefore, in a signaling exchange process, the user context information is shared between the first network element and the second network element by using the shared data layer. Advantages of performing data exchange in this manner lie in that: First, for user context information that already exists at the shared data layer, the first network element may directly obtain the user context information from the shared data layer, to avoid signaling consumption. Second, for user context information newly generated by the second network element, usually, the user context information needs to be updated to the shared data layer, and therefore, data exchange is implemented in a process of updating data to the shared data layer, to reduce signaling consumption between network elements as well.

It should be understood that temporary data related to the control signaling includes data required by the first network element only in a process of executing the control signaling. The temporary data related to the control signaling does not include the user context information, is usually temporary one-time data in the signaling exchange process, is valid only between two network elements that interact with each other, and does not need to be shared between other network elements. The temporary data automatically becomes invalid after the service procedure ends. Therefore, it is not valuable to write the temporary data related to the control signaling into the shared data layer, and the temporary data related to the control signaling only needs to be transmitted to the first network element by using the control signaling.

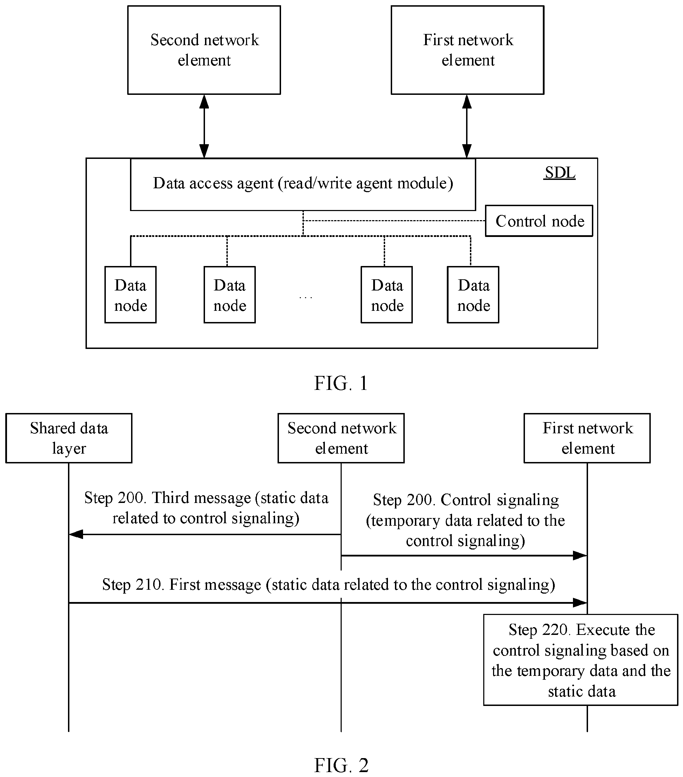

For example, a system architecture to which a data transmission method according to an embodiment of this application is applied may be shown in FIG. 1. The system architecture includes a first network element, a second network element, and a shared data layer (shared data layer, SDL). The SDL includes a data read/write agent function module, a data node (data node), and a control node (control node). The read/write agent function is used to read/write data stored in the data node. The control node is used for functions such as data node management, data control management, fault processing, scaling, and data access guiding.

A data transmission method in the embodiments of this application is described in detail by using the system architecture shown in FIG. 1 as an example.

As shown in FIG. 2, a data transmission method in an embodiment of this application includes the following steps.

Step 200. A second network element sends control signaling to a first network element, and sends a third message to a shared data layer, where the control signaling includes temporary data related to the control signaling, and the third message includes static data related to the control signaling.

Step 210. After receiving the third message, the shared data layer sends a first message to the first network element, where the first message includes the static data related to the control signaling.

Step 220. After receiving the control signaling from the second network element and receiving the first message from the shared data layer, the first network element executes the control signaling based on the temporary data related to the control signaling that is included in the control signaling and the static data related to the control signaling that is included in the first message.

In this embodiment of this application, the second network element sends the temporary data related to the control signaling to the first network element by using the control signaling, and sends the static data related to the control signaling to the first network element by using the shared data layer. Therefore, compared with the prior art, this helps reduce channel bandwidth resources that the control signaling needs to occupy.

It should be noted that, in this embodiment of this application, before step 200, the second network element determines the temporary data related to the control signaling and the static data related to the control signaling. As a service procedure becomes standardized, data that needs to be exchanged between network elements is determined, and content of the data may be different. Therefore, a correspondence of a data type may be preconfigured. For example, if the data is an MM user context, the data corresponds to a data type of static data. In addition, in this embodiment of this application, identification information may further be preset in the data. For example, data carrying an identifier 1 corresponds to static data, and data carrying an identifier 0 corresponds to temporary data. This is not limited in this embodiment of this application.

In a specific implementation of step 210, after receiving the third message, the shared data layer may directly send the first message to the first network element. Alternatively, after receiving a second message sent by the second network element, the shared data layer sends the first message to the first network element, where the second message is used to request the shared data layer to send the first message to the first network element. This is not limited in this embodiment of this application.

In addition, in this embodiment of this application, to help the shared data layer write data, the first message further includes identification information of a terminal in a service procedure corresponding to the control signaling. For example, the identification information of the terminal may be an international mobile subscriber identity (international mobile subscriber identification number, IMSI). Specifically, the shared data layer writes the static data included in the third message into storage space corresponding to the identification information of the terminal.

In a possible design, in this embodiment of this application, the shared data layer determines, based on identification information of the service procedure, the static data related to the control signaling that is included in the first message. Specifically, the identification information of the service procedure may be sent to the shared data layer by using the third message, or may be sent to the shared data layer by using the second message. For example, the determining process may be obtained by querying, by the shared data layer, a data template configuration table. The configuration table is mainly used to determine a type set of data that needs to be sent by the SDL to the first network element in different procedure phases. The configuration table may be configured into the shared data layer by a network management system, an NFV-MANO (network function virtualization management and orchestration), or the like in a network initialization process or a shared data layer instance initialization process. The configuration table includes all service procedures in a network. Different procedures may be each implemented by using a configuration sub-table. For example, a configuration sub-table corresponding to a service procedure SI-based handover is shown in Table 1.

**Table 1**

| Service procedure | Type number of a service procedure | Service procedure phase | Number of a service procedure phase | Target network element type | Parameter type |
|---|---|---|---|---|---|
| S1-based Handover | 0x03 | S1 Handover Decision | 0x01 | Source eNB | |
| | | Handover Required | 0x02 | Source MME | CSG Subscription Data |
| | | Forwa | 0x03 | Target | S-GW IP |
| | | rd Relocation Request | | MME | address for S11/S4 |
| | | Create Session Request | 0x04 | Target S-GW | bearer context(s) with PDN GW addresses and TEIDs |
| | | Create Session Response | 0x05 | Target MME | |
| | | Hando ver Required | 0x06 | Target eNB | EPS Bearers to Setup, AMBR, Source to Target transparent container |
| | | Hando ver Request Acknowled ge | 0x07 | Target MME | EPS Bearer Setup list, EPS Bearers failed to setup list, |
| | | Create Indirect Data | 0x08 | Target S-GW | target eNodeB addresses and |
| | | Forwarding Tunnel Request | | | TEIDs for forwarding |
| | | Create Indirect Data Forwarding Tunnel Response | 0x09 | Target MME | |
| | | Forwa rd Relocation Response | 0x10 | Source MME | |
| | | Create Indirect Data Forwarding Tunnel Request | 0x11 | Source S-GW | addresses and TEIDs for forwarding |
| | | Create Indirect Data Forwarding Tunnel Response | 0x12 | Source MME | |
| | | Handover Command | 0x13 | Source eNB | Target to Source transparent container, Bearers subject to forwarding, Bearers to Release |
| | | eNode B Status Transfer | 0x14 | Target eNB | |
| | | Handover Confirm | 0x15 | | |

In a specific implementation, an identifier of the service procedure may include a type number of the service procedure and a number of a service procedure phase, where the service procedure is the service procedure corresponding to the control signaling. It should be noted that the target network element type in Table 1 indicates a type of a network element to which data in Table 1 needs to be sent. When the service procedure is SI-based handover, and the service procedure phase in which the second network element is located is Handover Required, the identification information of the service procedure is 0x0302.

When the second message received by the shared data layer includes the identification information of the service procedure, a parameter type that needs to be sent to the first network element may be determined based on the identification information of the service procedure.

After determining the parameter type that needs to be sent to the first network element, the shared data layer reads, from the storage space corresponding to the identification information of the terminal, a parameter value corresponding to the determined parameter type that needs to be sent to the first network element. Specifically, the parameter value corresponding to the parameter type that needs to be sent to the first network element includes the static data related to the control signaling.

Configuration tables similar to Table 1 may be preconfigured for different types of service procedures. However, different network elements are in different service procedures. When the different service procedures belong to a same type of service procedure, the network elements each may determine, by using a preconfigured configuration table of this type of service procedure, a parameter that needs to be sent.

In addition, in this embodiment of this application, the temporary data related to the control signaling and the static data related to the control signaling are respectively from the second network element and the shared data layer. Therefore, to enable the second network element to correctly execute the control signaling, an optional implementation is: Synchronization identification information is added to the third message and the control signaling. The synchronization identification information may be time information, or a bit value such as 1010001, or a sequence. Specifically, if the second network element sends the control signaling to the first network element and sends the third message to the shared data layer at the same time, the time information may be time information of sending the control signaling or sending the third message. If the second network element sends the control signaling to the first network element and sends the third message to the shared data layer at different times, the time information may be time information of earlier sending of the control signaling and the third message. For example, when the control signaling is sent earlier, the time information is time information of sending the control signaling to the first network element by the second network element; and when the third message is sent earlier, the time information is time information of sending the third message to the shared data layer by the second network element. This is not limited in this embodiment of this application, provided that the synchronization identification information included in the control signaling and the synchronization identification information included in the third message are the same.

After receiving the control signaling, the first network element obtains the synchronization identification information in the control signaling, adds the synchronization identification information to the second message, and sends the second message to the shared data layer. When determining that the synchronization identification information included in the second message is consistent with the synchronization identification information included in the third message, the shared data layer sends the first message to the first network element, where the first message includes the static data related to the control signaling. When the shared data layer determines that the synchronization identification information included in the second message is inconsistent with the synchronization identification information included in the third message, the shared data layer may not receive a third message that has synchronization identification information the same as that included in the second message, and the shared data layer enters a waiting state, and continues to receive the second message within preset duration for determining the synchronization identification information; or the shared data layer sends a waiting indication to the first network element, where the waiting indication is used to instruct the first network element to continue to send the second message to the shared data layer after waiting for preset duration, and then continues to determine the synchronization identification information.

In addition, in this embodiment of this application, another optional synchronization manner is applicable to a scenario in which the control signaling and the third message are sent synchronously. The manner is: The control signaling includes synchronization identification information, where the synchronization identification information may be time information of sending the control signaling to the first network element by the second network element, or time information of sending the third message to the shared data layer by the second network element. For example, the time information may be 13:00:01 on May 23, 2016. In addition, the time information may further be accurate to milliseconds, microseconds, or the like based on a requirement. This is not limited in this embodiment of this application.

After receiving the control signaling, the first network element adds synchronization time information included in the control signaling to the second message and sends the second message to the shared data layer. After receiving the second message, the shared data layer determines whether a time indicated by the synchronization time information is less than time information that is of receiving the third message and that is recorded by the shared data layer. If yes, the shared data layer sends the first message to the first network element; otherwise, the shared data layer sends a waiting indication to the first network element.

In the scenario in which the control signaling and the third message are sent synchronously, still another optional synchronization manner is: The third message includes synchronization identification information, and a specific implementation of the synchronization identification information is similar to the implementation of the synchronization identification information in the another optional synchronization manner. Details are not described herein again.

After receiving the control signaling, the first network element records receiving time information of the control signaling, adds the recorded receiving time information of the control signaling to the second message, and sends the second message to the shared data layer. After receiving the second message, the shared data layer determines whether a time indicated by the receiving time information of the control signaling is greater than a time indicated by the synchronization identification information included in the third message. If yes, the shared data layer sends the first message to the first network element; otherwise, the shared data layer sends a waiting indication to the first network element.

In this embodiment of this application, when sending the control signaling to the first network element, the second network element adds, to the third message, transparently transmitted data that needs to be forwarded by the second network element to a third network element, and sends the third message to the shared data layer, to forward the third message to the third network element by using the shared data layer.

Generally, in the prior art, in a process of signaling exchange between two network elements, although the transparently transmitted data is sent by the second network element to the first network element by using the control signaling, the first network element actually does not need the data in terms of function logic, and the second network element only transmits the data to another subsequent network element by using the first network element. The transparently transmitted data includes data such as configuration information and status information (for example, source to target transparent container and eNB status transfer transparent container) of a source side air interface that are forwarded by a source eNB to a target eNB in a handover procedure, and serving network info and UE time zone in a service procedure initiated by an MME to an SGW and a PGW. In this embodiment of this application, transmission is performed by using the shared data layer, not only to help avoid problems of repeated transmission and repeated encoding and decoding between network elements that exist when transmission is performed by using the control signaling in the prior art, but also to help reduce the channel bandwidth resources that the control signaling needs to occupy.

The following describes the embodiments of this application in detail based on a user registration procedure in 5G.

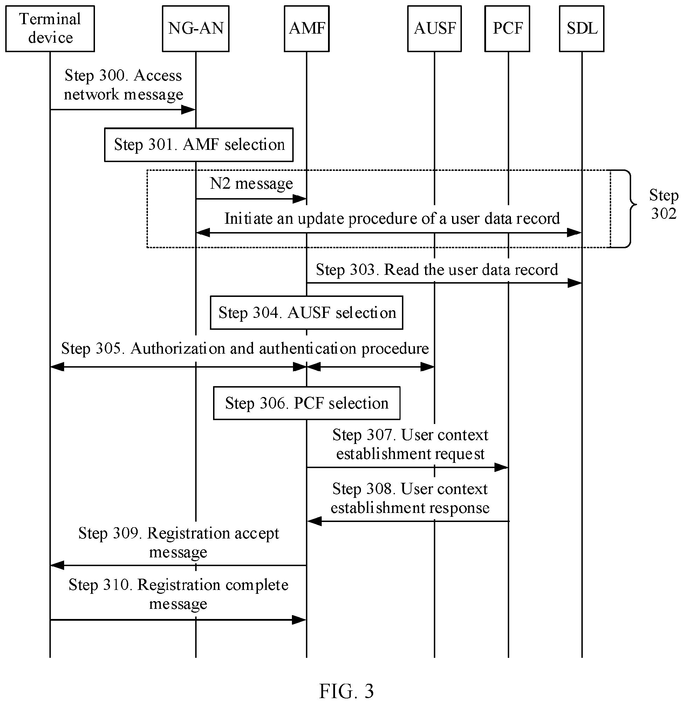

As shown in FIG. 3, a data transmission method based on the user registration procedure in an embodiment of this application includes the following steps.

Step 300. A terminal device sends an access network message (access network message, AN Message) to an access network function node (next generation access network, NG-AN), where the AN message includes a registration request (Registration Request) and an AN parameter, and specifically, the AN parameter includes information such as user identity information (for example, a GUTI or an IMSI) and a selected network.

Step 301. After receiving the AN message sent by the terminal device, the NG-AN selects an AMF instance. For example, the AMF instance may be selected according to a load balancing principle.

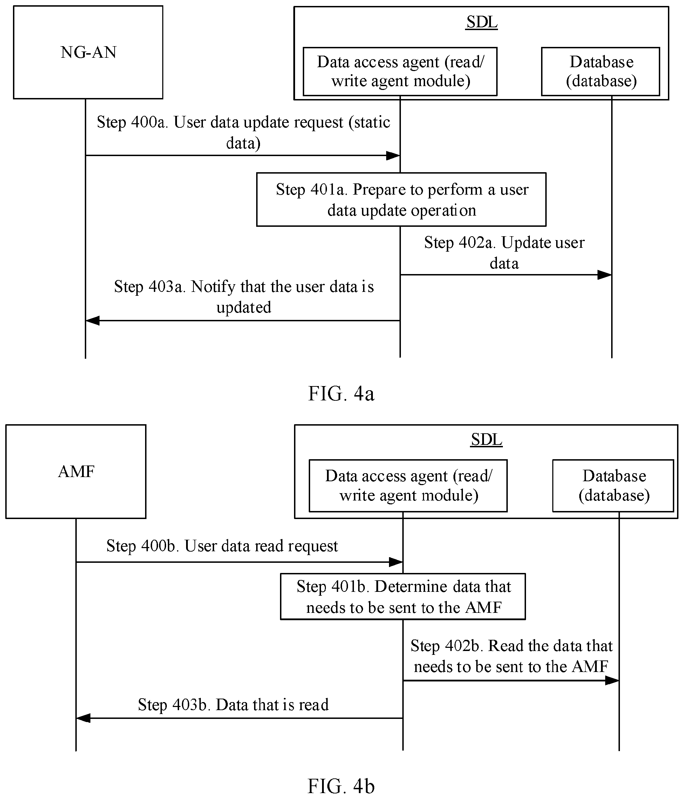

Step 302. The NG-AN sends an N2 message to the selected AMF, where the N2 message includes information such as the registration request and the user identity information that are included in the AN message, and synchronization identification information (for example, a timestamp generated before the NG-AN sends the AN message); and the NG-AN initiates a data update process to an SDL, so that static data related to the registration request is updated to the SDL. Specifically, the data update process initiated by the NG-AN to the SDL is shown in FIG. 4a.

The following uses an example shown in FIG. 4a in which the NG-AN initiates an update procedure of a user data record to the SDL for specific description.

Step 303. After receiving the N2 message sent by the NG-AN, the AMF obtains the user identity information from the N2 message, and initiates a data read process to the SDL, to read static data in the SDL that is required by the AMF to execute the registration request.

The data read process initiated by the AMF to the SDL is shown in FIG. 4b.

In addition, after the AMF receives the N2 message, if the N2 message does not include the user identity information, and the AMF does not obtain the user identity information from the SDL, the AMF may send an identity information request (Identity Request) to the terminal device. The identity request is used to request the user identity information from the terminal device. After receiving the identity request sent by the AMF, the terminal device sends an authentication response (Identity Response) to the AMF, where the identify response includes the user identity information.

Step 304. The AMF executes the registration request. Specifically, if a type of the registration request of the terminal device is initial attach, or the AMF obtains the user identity information from the terminal device, the AMF prepares to initiate an authorization and authentication procedure, to select an AUSF instance.

Step 305. After the AMF selects the AUSF instance, the UE, the AMF, and the AUSF perform the authorization and authentication procedure, where in the authorization and authentication procedure, the AUSF updates a generated user security context to the SDL, and a specific procedure is similar to the user data update procedure shown in FIG. 4b. Details are not described herein again.

Step 306. If determining, in the authorization and authentication procedure, that the context obtained from the SDL does not include available access and mobility policy information, the AMF selects a PCF instance, and prepares to initiate a context establishment procedure.

Step 307. The AMF sends a user context establishment request (UE Context Establishment Request) to the selected PCF, where the UE context establishment request includes the user identity information.

Step 308. After receiving the UE context establish request, the PCF generates access and mobility policy information, and sends a user context establishment response (UE Context Establishment Response) to the AMF, where the UE context establishment response does not include the access and mobility policy information; and the PCF also sends a user data update request to the SDL, where the user data update request includes the access and mobility policy information. A specific user data update procedure is similar to the user data update procedure shown in FIG. 4a. After receiving a request response from the PCF, the AMF initiates a user data read process to the SDL, to read the access and mobility policy information. A specific data read process is similar to the data read process shown in FIG. 4b, and details are not described herein again.

Step 309. The AMF sends a registration accept (Registration Accept) message to the terminal device, where the registration accept message includes information such as the GUTI, a registration area, mobility restriction, a PDU session status, and a periodic registration timer.

Step 310. If the AMF allocates a new GUTI to the UE, the UE sends a registration complete (Registration Complete) message to the AMF.

As shown in FIG. 4a, in this embodiment of this application, the data update process initiated by the NG-AN to the SDL includes the following steps.

Step 400a. The NG-AN sends a user data update request (User Data Update Request) to the SDL, where the user data update request includes static data related to the user data update request, such as the user identity information (for example, the IMSI or the GUTI) and a user context such as location information, a cell identity, or a RAT type. The user data update request further includes synchronization identification information, where the synchronization identification information may be a timestamp generated before the NG-AN sends the N2 message to the AMF and sends the user data update request to the SDL, and time precision may be at a second level, a millisecond level, a microsecond level, or the like. This is not limited herein.

Step 401a. After receiving the user data update request, a data access agent in the SDL prepares to perform the user data update operation. Specifically, the data access agent searches a database table based on the user identity information, and obtains storage location information of the user context data. If it is found in this phase that the user data record does not exist, a process of establishing the user data record is performed, that is, data storage space is allocated to a user, and the user data record is established.

Step 402a. The data access agent in the SDL initiates the user data update operation to a database (DataBase), and updates the user context such as the location information, the cell identity, or the RAT type and the synchronization identification information to a data record corresponding to the user identity information.

Step 403a. After user data in the database is updated, the data access agent in the SDL returns a user data update response (User Data Update Response) to the NG-AN, to notify the NG-AN that the user data is successfully updated to the SDL.

As shown in FIG. 4b, in this embodiment of this application, the data read process initiated by the AMF to the SDL includes the following steps.

Step 400b. After receiving the registration request sent by the NG-AN, the AMF sends a user data read request (User Data Read Request) to the data access agent in the SDL, where the user data read request may further include identity information (for example, an IMSI or a GUTI) of the AMF, procedure identification information (which indicates a registration request procedure) of a current service procedure in which the AMF is currently located, and the synchronization identification information obtained by the AMF from the N2 message sent by the NG-AN.

Step 401b. After receiving the user data read request, the data access agent in the SDL determines, based on the procedure identification information of the service procedure and the identification information of the terminal, data that needs to be sent to the AMF, where the data that needs to be sent to the AMF includes the user identity IMSI, an MM context (which includes the access and mobility policy), and the like.

Step 402b. The data access agent initiates a database read operation to a database that actually stores the user data. The data access agent first reads synchronization identification information in the user data record, and compares the synchronization identification information with the synchronization identification information carried in the data read request of the AMF. If the two pieces of synchronization identification information are the same, the data access agent reads the user MM context and the location information and the cell identity of the UE from the database; or if the two pieces of synchronization identification information are different, the data access agent enters a waiting state (a timeout period is not expired) until the two pieces of synchronization identification information are the same, and reads data again.

Step 403b. The data access agent in the SDL adds the data read from the database to a user data read response, and sends the user data read response to the AMF, to complete the data read operation.

In FIG. 4a and FIG. 4b, only an interaction process between the SDL and each of the NG-AN and the AMF in the step of sending the registration request by the NG-AN to the AMF is used as an example for description. An interaction process between a corresponding VNF and the SDL in a step of another control signaling procedure is similar to the process, and details are not described herein again.

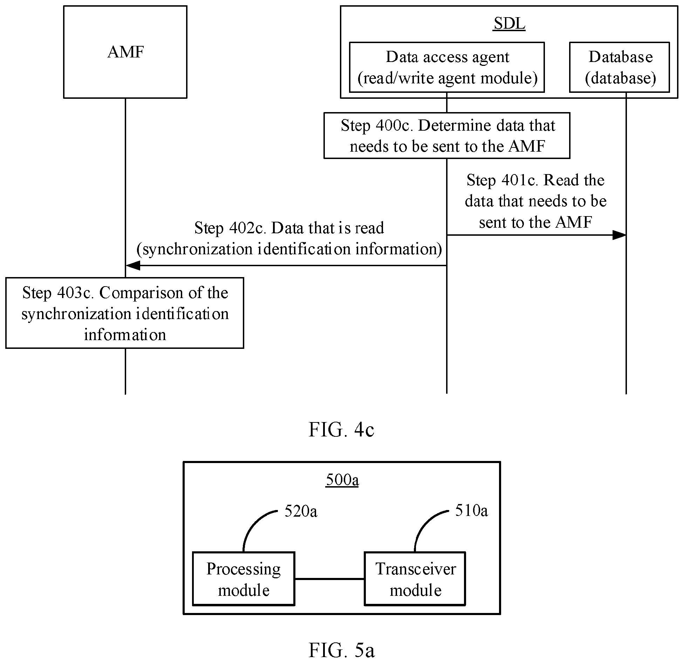

In addition, in this embodiment of this application, as shown in FIG. 4c, the SDL may alternatively actively send data to the AMF. Specifically, the following steps are included.

Step 400c. After updating the data record based on data included in the user data update request sent by the NG-AN, the data access agent in the SDL determines, based on the procedure identification information of the service procedure and the identification information of the terminal, user data that needs to be sent to the AMF, where the user data includes information such as the user identity IMSI and the MM context (which includes the access and mobility policy).

Step 401c. The data access agent reads, from the database that actually stores the user data, the user data that is determined to be sent to the AMF. Specifically, the data access agent in the SDL may determine, from a preconfigured correspondence between identification information of a service procedure and a target network element type based on the identification information of the service procedure, that a type of a target network element to which the read data needs to be sent is an AMF, and then determine identity information, for example, internet protocol (internet protocol, IP) address information, of the AMF. The IP address information may be obtained from the user context (for example, the IP address information may be stored in a serving AMF ID info record in the user context), or may be obtained from the user data update request user data update request message sent by the second network element. This is not limited in this embodiment of this application. It should be noted that, specific configuration of the correspondence between identification information of a service procedure and a target network element type may be shown in Table 1.

Step 402c. The data access agent sends the read data to the AMF, where the data sent to the AMF may further include synchronization identification information.

Step 403c. After receiving the data sent by the data access agent, the AMF compares the synchronization identification information included in the received N2 message with the synchronization identification information included in the data sent by the data access agent. If the two pieces of synchronization identification information are the same, the AMF executes the registration request included in the N2 message; otherwise, the AMF continues to wait for receiving the data sent by the SDL, and when synchronization identification information included in data received from the SDL is the same as the synchronization identification information included in the N2 message, the AMF executes the registration request included in the N2 message.

Based on the same concept, an embodiment of this application further provides a first network element, and the first network element is configured to perform actions or functions of the first network element in the foregoing method embodiments.

Based on the same concept, an embodiment of this application further provides a shared data layer, and the shared data layer is configured to perform actions or functions of the shared data layer in the foregoing method embodiments.

Based on the same concept, an embodiment of this application further provides a second network element, and the second network element is configured to perform actions or functions of the second network element in the foregoing method embodiments.

An embodiment of this application further provides a communications system, including the first network element, the shared data layer, and the second network element in the foregoing embodiments.

For brevity, for content of an apparatus part, specifically refer to the method embodiments. Details are not repeatedly described.

As shown in FIG. 5a, a first network element 500a in an embodiment of this application includes a transceiver module 510a and a processing module 520a. The transceiver module 510a is configured to: receive control signaling from a second network element, and receive a first message from a shared data layer, where the control signaling includes temporary data related to the control signaling, the first message includes static data related to the control signaling. The processing module 520a is configured to execute the control signaling based on the temporary data and the static data.

In a possible design, the temporary data includes data required by the processor only in a process of executing the control signaling.

In a possible design, the static data includes user context information.

In a possible design, the transceiver module 510a is further configured to send a second message to the shared data layer before receiving the first message from the shared data layer, where the second message is used to request the shared data layer to send the first message to the first network element.

In a possible design, the second message includes at least one of identification information of a service procedure corresponding to the control signaling, identification information of a terminal in the service procedure, and synchronization identification information.

It should be noted that, in this embodiment of this application, the processing module 520a may be implemented by a processor, and the transceiver module 510a may be implemented by a transceiver. Specifically, the transceiver includes a receiver and a transmitter, where the receiver is configured to receive a signal or data, and the transmitter is configured to send a signal or data.

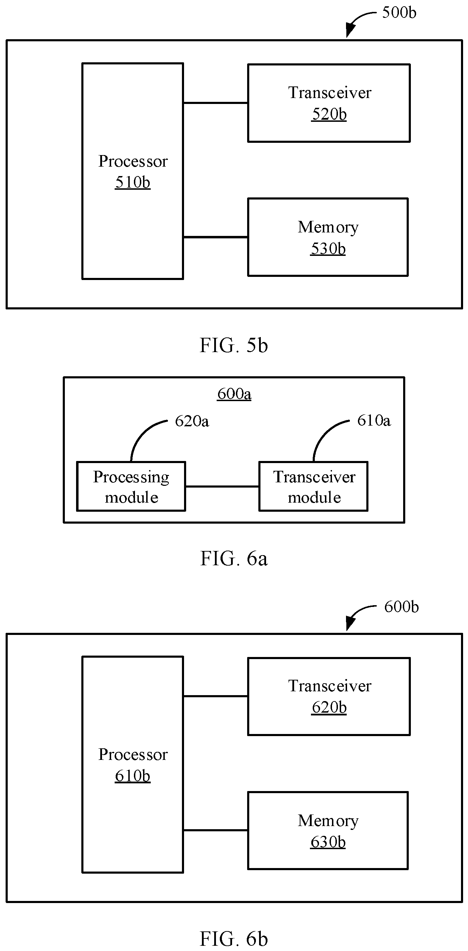

FIG. 5b is a schematic structural diagram of hardware of a first network element 500b according to an embodiment of this application. The first network element 500b may include a processor 510b, a transceiver 520b, and a memory 530b. The memory 530b may be configured to store a program/code preinstalled in the first network element 500b at delivery, and may further store code and the like that is executed by the processor 510b.

The processor 510b may be a general-purpose central processing unit (central processing unit, CPU), a microprocessor, an application-specific integrated circuit (application specific integrated circuit, ASIC), or one or more integrated circuits, and is configured to perform related operations, to implement the technical solutions provided in the embodiments of this application.

It should be noted that although the first network element 500b shown in FIG. 5b only includes the processor 510b, the transceiver 520b, and the memory 530b, in a specific implementation process, persons skilled in the art should understand that the first network element 500b further includes another component necessary for normal running. In addition, based on a specific requirement, persons skilled in the art should understand that the first network element 500b may further include a hardware component for implementing another additional function. In addition, persons skilled in the art should understand that the first network element 500b may include only components or modules necessary for implementing the embodiments of this application, and does not need to include all the components shown in FIG. 5b.

Persons of ordinary skill in the art may understand that all or some of the processes of the methods in the foregoing embodiments may be implemented by a computer program instructing relevant hardware. The program may be stored in a computer-readable storage medium. When the program is run, the processes of the methods in the foregoing embodiments may be performed. The foregoing storage medium may be a magnetic disk, an optical disc, a read-only memory (read-only memory, ROM), a random access memory (random access memory, RAM), or the like.

As shown in FIG. 6a, a shared data layer 600a in an embodiment of this application includes a transceiver module 610a and a processing module 620a. The transceiver module 610a is configured to receive a third message from a second network element and send a first message to a first network element, where the third message includes static data related to control signaling. The processing module 620a is configured to generate the first message sent to the first network element, where the first message includes the static data related to the control signaling, so that the first network element is configured to execute, based on the static data, the control signaling sent by the second network element.

In a possible design, the static data includes user context information.

In a possible design, the third message further includes identification information of a service procedure corresponding to the control signaling, and the processing module 620a is further configured to: before the transceiver module 610a sends the first message to the first network element, determine the static data related to the control signaling based on the identification information of the service procedure.

In a possible design, the third message further includes device identification information of a terminal device in the service procedure corresponding to the control signaling, and the processing module 620a is further configured to write the static data included in the third message into storage space corresponding to the identification information of the terminal.

In a possible design, the transceiver module 610a is further configured to receive a second message from the first network element before sending the first message to the first network element, where the second message includes at least one of the identification information of the service procedure corresponding to the control signaling, the identification information of the terminal in the service procedure, and synchronization identification information, and the second message is used to request the shared data layer to send the first message to the first network element.

In a possible design, the third message further includes synchronization identification information, and the processing module 620a is further configured to: before the transceiver module 610a sends the first message to the first network element, determine that the synchronization identification information included in the second message is consistent with the synchronization identification information included in the third message.

It should be noted that, in this embodiment of this application, the processing module 620a may be implemented by a processor, and the transceiver module 610a may be implemented by a transceiver. Specifically, the transceiver includes a receiver and a transmitter, where the receiver is configured to receive a signal or data, and the transmitter is configured to send a signal or data.

FIG. 6b is a schematic structural diagram of hardware of a shared data layer 600b according to an embodiment of this application. The shared data layer 600b may include a processor 610b, a transceiver 620b, and a memory 630b. The memory 630b may be configured to store a program/code preinstalled at the shared data layer 600b at delivery, and may store code and the like that is executed by the processor 610b.

The processor 610b may be a general-purpose CPU, a microprocessor, an ASIC, or one or more integrated circuits, and is configured to perform related operations, to implement the technical solutions provided in the embodiments of this application.

It should be noted that although the shared data layer 600b shown in FIG. 6b includes only the processor 610b, the transceiver 620b, and the memory 630b, in a specific implementation process, persons skilled in the art should understand that the shared data layer 600b further includes another component necessary for normal running. In addition, based on a specific requirement, persons skilled in the art should understand that the shared data layer 600b may further include a hardware component for implementing another additional function. In addition, persons skilled in the art should understand that the shared data layer 600b may include only components or modules necessary for implementing the embodiments of this application, and does not need to include all the components shown in FIG. 6b.

Persons of ordinary skill in the art may understand that all or some of the processes of the methods in the foregoing embodiments may be implemented by a computer program instructing relevant hardware. The program may be stored in a computer-readable storage medium. When the program is run, the processes of the methods in the foregoing embodiments may be performed. The storage medium may be a magnetic disk, an optical disk, a ROM, a RAM, or the like.

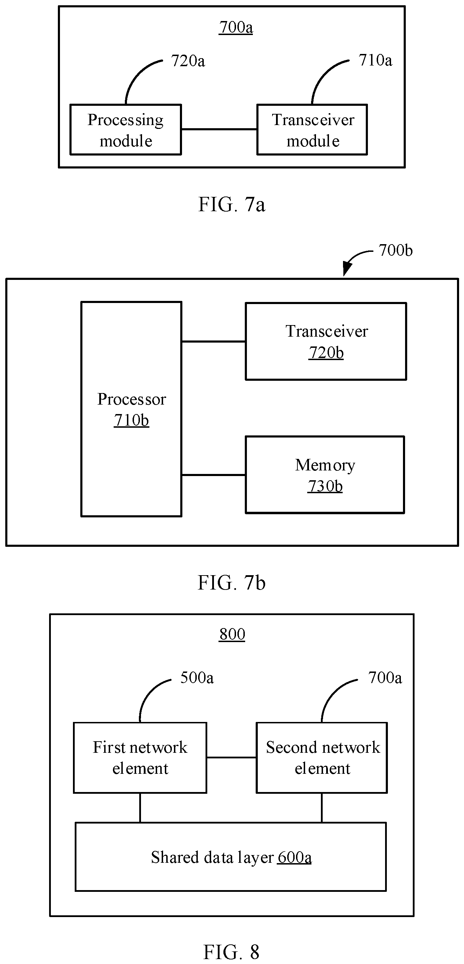

As shown in FIG. 7a, a second network element 700a in an embodiment of this application includes a transceiver module 710a and a processing module 720a. The transceiver module 710a is configured to send control signaling and a third message to a first network element, where the control signaling includes temporary data related to the control signaling, the third message includes static data related to the control signaling, and the third message is generated by the processing module 720a.

In a possible design, the temporary data includes data required by the first network element only in a process of executing the control signaling.

In a possible design, the static data includes user context information.

In a possible design, the third message further includes at least one of identification information of a service procedure corresponding to the control signaling, identification information of a terminal in the service procedure, and synchronization identification information.

In a possible design, the processing module 720a is further configured to determine the temporary data related to the control signaling and the static data related to the control signaling.

In a possible design, the control signaling further includes at least one of the identification information of the terminal in the service procedure corresponding to the control signaling and the synchronization identification information.

In a possible design, the third message further includes transparently transmitted data that needs to be sent to a third network element.

It should be noted that, in this embodiment of this application, the processing module 720a may be implemented by a processor, and the transceiver module 710a may be implemented by a transceiver. Specifically, the transceiver includes a receiver and a transmitter, where the receiver is configured to receive a signal or data, and the transmitter is configured to send a signal or data.

FIG. 7b is a schematic structural diagram of hardware of a second network element 700b according to an embodiment of this application. The second network element 700b may include a processor 710b, a transceiver 720b, and a memory 730b. The memory 730b may be configured to store a program/code preinstalled in the second network element 700b at delivery, and may store code and the like that is executed by the processor 710b.

The processor 710b may be a general-purpose CPU, a microprocessor, an ASIC, or one or more integrated circuits, and is configured to perform related operations, to implement the technical solutions provided in the embodiments of this application.

It should be noted that although the second network element 700b shown in FIG. 7b only includes the processor 710b, the transceiver 720b, and the memory 730b, in a specific implementation process, persons skilled in the art should understand that the second network element 700b further includes another component necessary for normal running. In addition, based on a specific requirement, persons skilled in the art should understand that the second network element 700b may further include a hardware component for implementing another additional function. In addition, persons skilled in the art should understand that the second network element 700b may include only components or modules necessary for implementing the embodiments of this application, and does not need to include all the components shown in FIG. 7b.

Persons of ordinary skill in the art may understand that all or some of the processes of the methods in the foregoing embodiments may be implemented by a computer program instructing relevant hardware. The program may be stored in a computer-readable storage medium. When the program is run, the processes of the methods in the foregoing embodiments may be performed. The storage medium may be a magnetic disk, an optical disk, a ROM, a RAM, or the like.

As shown in FIG. 8, a communications system 800 in an embodiment of this application includes the first network element 500a shown in FIG. 5a, the shared data layer 600a shown in FIG. 6a, and the second network element 700a shown in FIG. 7a.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although some possible embodiments of this application have been described, persons skilled in the art can make changes and modifications to these embodiments once they learn the basic inventive concept. Therefore, the following claims are intended to be construed as to cover the embodiments of this application and all changes and modifications falling within the scope of this application.

Apparently, persons skilled in the art can make various modifications and variations to this application without departing from the scope of this application. This application is intended to cover these modifications and variations of this application provided that they fall within the scope of protection defined by the following claims and their equivalent technologies.

## Claims

1. A data transmission method, comprising:
receiving, by a first network element, control signaling from a second network element, wherein the control signaling comprises temporary data related to the control signaling;
receiving, by the first network element, a first message from a shared data layer, wherein the first message comprises static data related to the control signaling; and
executing, by the first network element, the control signaling based on the temporary data and the static data.

2. The method according to claim 1, wherein the temporary data comprises data required by the first network element only in a process of executing the control signaling.

3. The method according to claim 1 or 2, wherein the static data comprises user context information.

4. The method according to any one of claims 1 to 3, wherein before the receiving, by the first network element, a first message from a shared data layer, the method further comprises:
sending, by the first network element, a second message to the shared data layer, wherein the second message is used to request the shared data layer to send the first message to the first network element.

5. The method according to claim 4, wherein the second message comprises at least one of identification information of a service procedure corresponding to the control signaling, identification information of a terminal in the service procedure, and synchronization identification information.

6. A data transmission method, comprising:
receiving, by a shared data layer, a third message from a second network element, wherein the third message comprises static data related to control signaling; and
sending, by the shared data layer, a first message to a first network element, wherein the first message comprises the static data related to the control signaling, so that the first network element is configured to execute, based on the static data, the control signaling sent by the second network element.

7. The method according to claim 6, wherein the static data comprises user context information.

8. The method according to claim 6 or 7, wherein the third message further comprises identification information of a service procedure corresponding to the control signaling; and
before the sending, by the shared data layer, a first message to a first network element, the method further comprises:
determining, by the shared data layer, the static data related to the control signaling based on the identification information of the service procedure.

9. The method according to any one of claims 6 to 8, wherein the third message further comprises device identification information of a terminal device in the service procedure corresponding to the control signaling, and the method further comprises:
writing, by the shared data layer, the static data comprised in the third message into storage space corresponding to the identification information of the terminal.

10. The method according to any one of claims 6 to 9, wherein before the sending, by the shared data layer, a first message to a first network element, the method further comprises:
receiving, by the shared data layer, a second message from the first network element, wherein the second message comprises at least one of the identification information of the service procedure corresponding to the control signaling, the identification information of the terminal in the service procedure, and synchronization identification information, and the second message is used to request the shared data layer to send the first message to the first network element.

11. The method according to claim 10, wherein the third message further comprises synchronization identification information; and
before the sending, by the shared data layer, a first message to a first network element, the method further comprises:
determining, by the shared data layer, that the synchronization identification information comprised in the second message is consistent with the synchronization identification information comprised in the third message.

12. A data transmission method, comprising:
sending, by a second network element, control signaling to a first network element, wherein the control signaling comprises temporary data related to the control signaling; and
sending, by the second network element, a third message to a shared data layer, wherein the third message comprises static data related to the control signaling.

13. The method according to claim 12, wherein the temporary data comprises data required by the first network element only in a process of executing the control signaling.

14. The method according to claim 12 or 13, wherein the static data comprises user context information.

15. The method according to any one of claims 12 to 14, wherein the third message further comprises at least one of identification information of a service procedure corresponding to the control signaling, identification information of a terminal in the service procedure, and synchronization identification information.

16. A first network element, comprising:
a transceiver, configured to receive control signaling from a second network element, and receive a first message from a shared data layer, wherein the control signaling comprises temporary data related to the control signaling, and the first message comprises static data related to the control signaling; and
a processor, configured to execute the control signaling based on the temporary data and the static data.

17. The first network element according to claim 16, wherein the temporary data comprises data required by the processor only in a process of executing the control signaling.

18. The first network element according to claim 16 or 17, wherein the static data comprises user context information.

19. The first network element according to any one of claims 16 to 18, wherein the transceiver is further configured to send a second message to the shared data layer before receiving the first message from the shared data layer, wherein the second message is used to request the shared data layer to send the first message to the first network element.

20. The first network element according to claim 19, wherein the second message comprises at least one of identification information of a service procedure corresponding to the control signaling, identification information of a terminal in the service procedure, and synchronization identification information.

21. A shared data layer, comprising:
a transceiver, configured to receive a third message from a second network element and send a first message to a first network element, wherein the third message comprises static data related to control signaling; and
a processor, configured to generate the first message sent to the first network element, wherein the first message comprises the static data related to the control signaling, so that the first network element is configured to execute, based on the static data, the control signaling sent by the second network element.

22. The shared data layer according to claim 21, wherein the static data comprises user context information.

23. The shared data layer according to claim 21 or 22, wherein the third message further comprises identification information of a service procedure corresponding to the control signaling; and
the processor is further configured to: before the transceiver sends the first message to the first network element, determine the static data related to the control signaling based on the identification information of the service procedure.

24. The shared data layer according to any one of claims 21 to 23, wherein the third message further comprises device identification information of a terminal device in the service procedure corresponding to the control signaling, and the processor is further configured to:
write the static data comprised in the third message into storage space corresponding to the identification information of the terminal.

25. The shared data layer according to any one of claims 21 to 24, wherein before sending the first message to the first network element, the transceiver is further configured to:
receive a second message from the first network element, wherein the second message comprises at least one of the identification information of the service procedure corresponding to the control signaling, the identification information of the terminal in the service procedure, and synchronization identification information, and the second message is used to request the shared data layer to send the first message to the first network element.

26. The shared data layer according to claim 25, wherein the third message further comprises synchronization identification information; and the processor is further configured to:
before the transceiver sends the first message to the first network element, determine that the synchronization identification information comprised in the second message is consistent with the synchronization identification information comprised in the third message.

27. A second network element, comprising:
a processor, configured to generate a third message, wherein the third message comprises static data related to control signaling; and
a transceiver, configured to send the control signaling and the third message to a first network element, wherein the control signaling comprises temporary data related to the control signaling.

28. The second network element according to claim 27, wherein the temporary data comprises data required by the first network element only in a process of executing the control signaling.

29. The second network element according to claim 27 or 28, wherein the static data comprises user context information.

30. The second network element according to any one of claims 27 to 29, wherein the third message further comprises at least one of identification information of a service procedure corresponding to the control signaling, identification information of a terminal in the service procedure, and synchronization identification information.
